# EUROPEAN PATENT SPECIFICATION

(11) **EP 4 576 332 B1**
(45) Date of publication and mention of the grant of the patent: **11.11.2026**
(21) Application number: 24220754.6
(22) Date of filing: 17.12.2024
(51) Int. Cl.: H01M 10/613, H01M 10/625, H01M 10/653, H01M 10/6556, H01M 10/6557, H01M 10/6567, F28D 1/047, F28F 3/02, F28F 21/06, H01M 10/6568

(54) **COOLING PLATE, METHOD FOR PRODUCING COOLING PLATE, AND BATTERY PACK**
KÜHLPLATTE, VERFAHREN ZUR HERSTELLUNG EINER KÜHLPLATTE UND BATTERIEPACK
PLAQUE DE REFROIDISSEMENT, PROCÉDÉ DE PRODUCTION DE PLAQUE DE REFROIDISSEMENT ET BLOC-BATTERIE

(30) Priority: 21.12.2023 CN 202311777164
(43) Date of publication of application: 25.06.2025
(73) Proprietor: Zhejiang Leapenergy Technology Co., Ltd., Hangzhou, Zhejiang 310000 (CN); Zhejiang Leapmotor Technology Co., Ltd, Hangzhou, Zhejiang 310051 (CN)
(72) Inventor: CAI, Jianjun, ZHEJIANG 310051 (CN); ZHOU, Xiaodong, ZHEJIANG 310051 (CN)
(74) Representative: Wörz, Volker Alfred

(56) References cited:
- US-A1- 2012 028 099
- US-A1- 2018 309 176

## Description

### TECHNICAL FIELD

The present disclosure relates to the field of battery cooling technologies, and in particular to a vertical cooling plate, a method for producing a vertical cooling plate, and a battery pack.

### BACKGROUND

During the operation of a battery pack, battery cells inside the battery pack may generate a substantial amount of heat. If the heat is not dissipated in time, a service life of the battery cells may be reduced. At present, liquid cooling plates are usually arranged at bottoms of the battery cells for dissipating the heat generated by the battery cells.

In related art, the liquid cooling plates are usually stamped and brazed liquid cooling plates made of aluminum alloy. The liquid cooling plates are not only heavy and not conducive to lightweight, but also costly. Moreover, after components made of the aluminum alloy are brazed together, welding defects generated between the components may not only affect the flatness of the liquid cooling plates and reduce the heat exchange efficiency of the liquid cooling plates, but also greatly reduce the strength of the liquid cooling plates. As a result, the liquid cooling plates have certain safety hazards during use.

US2018309176A1 discloses a battery assembly, including a housing, an array of battery cells provided within the housing, and a thermal exchange assembly adjacent the array. The thermal exchange assembly includes an inlet, an outlet, and a tube configured to direct fluid from the inlet to the outlet. The tube is overmolded with the housing.

US2012028099A1 discloses an electric storage module. The electric storage module includes: a cooling plate with a predetermined thickness between a front surface and a rear surface, with the front surface and the rear surface functioning as cooling surfaces by a coolant flowing in the cooling plate; a first battery row made up with a plurality of battery cells, to be cooled by the cooling plate, arrayed along a predetermined direction, with one end surfaces of the battery cells being coupled with the front surface of the cooling plate so as to achieve thermal conduction; and a second battery row made up with a plurality of battery cells, to be cooled by the cooling plate, arrayed along a predetermined direction, with one end surfaces of the battery cells being coupled with the rear surface of the cooling plate so as to achieve thermal conduction.

### SUMMARY

The present disclosure provides a vertical cooling plate, a method for producing a vertical cooling plate, and a battery pack to solve the problem of high cost and poor safety of liquid cooling plates in related art.

The present invention provides a cooling plate according to claim 1.

The present disclosure also provides a battery pack including a plurality of battery cells and a plurality of vertical cooling plates according to any one of embodiments mentioned above. The plurality of battery cells are arranged separate from each other along a thickness direction of the battery cells. Each of the vertical cooling plates is arranged between two adjacent battery cells and connected to the two adjacent battery cells.

The present disclosure further provides a method for producing a vertical cooling plate configured to produce the vertical cooling plate mentioned above. The method for producing the vertical cooling plate includes: processing thermally conductive plastic into a flow tube defined with a flow cavity; and casting thermally conductive silicone on an outer surface of the flow tube to form a thermally conductive plate, enabling the thermally conductive plate to wrap the outer surface of the flow tube.

Beneficial effects of the present disclosure are as follows. Different from the related art, the present disclosure provides the vertical cooling plate, the method for producing the vertical cooling plate, and the battery pack. The vertical cooling plate is fitted on the surface of the battery cell perpendicular to the thickness direction of the battery cell, that is, fitted on a large surface of the battery cell for cooling. Compared with related liquid cooling plates arranged at a bottom of the battery cell, a contact area between the vertical cooling plate and the battery cell is significantly increased, thereby effectively enhancing a cooling strength for the battery cell, alleviating the problem of uneven heat dissipation of the battery cell, and improving the operational reliability of the battery cell. Further, on one hand, by providing the flow tube including the plastic thermally conductive member, a heat conducting performance of the flow tube may be ensured, and the material cost of the vertical cooling plate is reduced because of low cost of plastic. Moreover, the weight of plastic is lighter than the weight of aluminum alloys, thereby effectively reducing the weight of the vertical cooling plate and meeting lightweight requirements. On the other hand, by providing the thermally conductive plate including the flexible thermally conductive member, the thermally conductive plate may be better fitted on the battery cell because of the flexibility of the thermally conductive plate, thereby improving the contact effect between the thermally conductive plate and the battery cell, and greatly improving the heat exchange efficiency between the vertical cooling plate and the battery cell. Furthermore, the flexible thermally conductive plate is conducive to absorb the tolerance of the battery cell or absorb the expansion force of the battery cell after the battery cell cyclically expands, so as to avoid the expansion force of the battery cell from squeezing the flow tube, causing the flow tube to rupture, thereby causing the heat exchange medium to leak from the flow tube. The vertical cooling plate may ensure a relatively high level of safety after long-term use. In addition, the thermally conductive plate is directly molded on the surface of the flow tube by means of infusion. The producing method is simple for molding, may effectively shorten assembly steps of the thermally conductive plate and the flow tube, thereby improving the molding efficiency of the vertical cooling plate. Furthermore, the producing method avoids disadvantages of high energy consumption of related brazing process and adverse effects of brazing on the flatness of the product, thereby further improving the heat exchange efficiency and reducing costs.

### BRIEF DESCRIPTION OF THE DRAWINGS

In order to illustrate the technical solutions in the embodiments of the present disclosure or in the related art more clearly, the drawings that need to be used in the description in the embodiments or in the related art are briefly introduced below. Obviously, the drawings in the following description are merely some embodiments of the present disclosure. For those skilled in the art, other drawings may also be obtained according to these drawings under the premise of without making creative efforts.
FIG. 1 is a schematic structural view of a vertical cooling plate with a double-sided tape according to some embodiments of the present disclosure.
FIG. 2 is a schematic cross-sectional view of a vertical cooling plate according to some embodiments of the present disclosure.
FIG. 3 is a schematic structural view of a flow tube according to some embodiments of the present disclosure.
FIG. 4 is a schematic main view of a vertical cooling plate according to some embodiments of the present disclosure.
FIG. 5 is a schematic cross-sectional view of a vertical cooling plate and a double-sided tape according to some embodiments of the present disclosure.

### DETAILED DESCRIPTION

In order to make purposes, features, and beneficial effects of the present disclosure mentioned above more obvious and easy to understand, the specific implementation methods are described in detail below with reference to the accompanying drawings. In the following description, many specific details are set forth to facilitate a full understanding of the present disclosure. However, the present disclosure may be implemented in many other ways different from methods described herein. Those skilled in the art may make similar improvements without violating the connotation of the present disclosure, so the present disclosure is not limited by the embodiments disclosed below.

It should be noted that when an assembly is referred to as being "fixed on" or "arranged on" another assembly, the assembly may be directly on the another assembly, or there may be a middle assembly between the assembly and the another assembly. When an assembly is considered to be "connected to" another assembly, the assembly may be directly connected to the another assembly, or there may be a middle assembly between the assembly and the another assembly. The terms "vertical", "horizontal", "upper", "lower", "left", "right", and similar expressions used in the specification of the present disclosure are for illustrative purposes only and do not represent an only implementation method.

In addition, the terms "first" and "second" are configured for descriptive purposes only and should not be understood as indicating or implying relative importance or implicitly indicating the number of the indicated technical features. Therefore, the features defined as "first" and "second" may explicitly or implicitly include at least one of the features. In the description of the present disclosure, the meaning of "a plurality of" is at least two, such as two, three, etc., unless otherwise clearly and specifically limited.

In the present disclosure, unless otherwise clearly specified and limited, a first feature being "on" or "under" a second feature may mean that the first feature is directly in contact with the second feature, or the first feature and the second feature are in contact indirectly through an middle medium. Moreover, a first feature being "on", "above", or "over" a second feature may mean that the first feature is exactly above or obliquely above the second feature, or simply means that a horizontal height of the first feature is higher than a horizontal height of the second feature. A first feature being "under", "below", or "beneath" a second feature may mean that the first feature is exactly below or obliquely below the second feature, or simply means that a horizontal height of the first feature is lower than a horizontal height of the second feature.

Unless otherwise defined, all technical terms and scientific terms used in the specification of the present disclosure have the same meanings as commonly understood by those skilled in the art. The terms used in the specification of the present disclosure are only for the purpose of describing the embodiments and are not intended to limit the present disclosure. The term "and/or" used in the specification of the present disclosure includes any and all combinations of one or more related listed items.

During the operation of a battery pack, battery cells inside the battery pack may generate a substantial amount of heat. If the heat is not dissipated in time, a service life of the battery cells may be reduced. At present, liquid cooling plates are usually arranged at bottoms of the battery cells for dissipating the heat generated by the battery cells.

In related art, the liquid cooling plates are usually stamped and brazed liquid cooling plates made of aluminum alloy. The liquid cooling plates are not only heavy and not conducive to lightweight, but also costly. Moreover, after components made of the aluminum alloy are brazed together, welding defects generated between the components may not only affect the flatness of the liquid cooling plates and reduce the heat exchange efficiency of the liquid cooling plates, but also greatly reduce the strength of the liquid cooling plates. As a result, the liquid cooling plates have certain safety hazards during use.

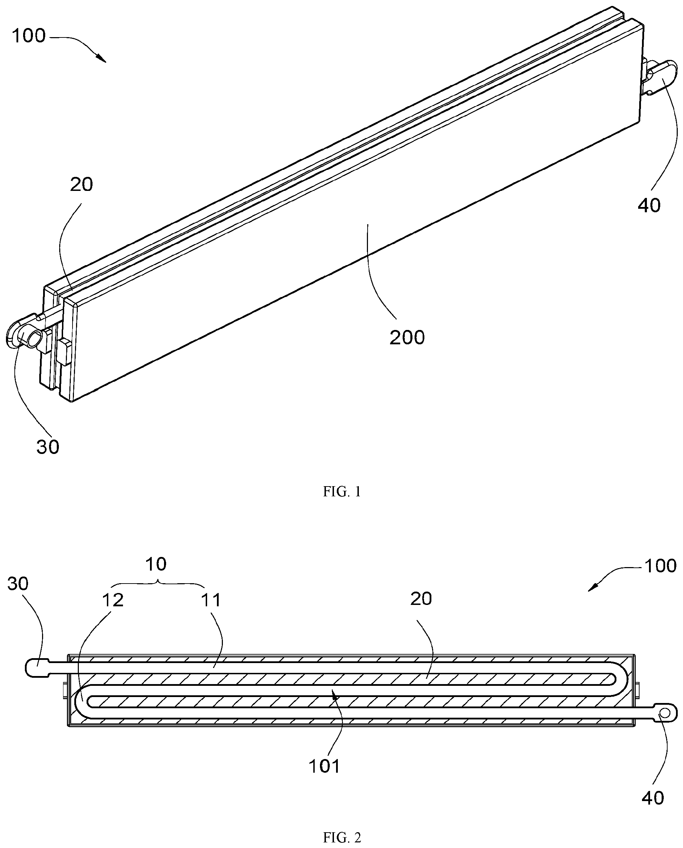

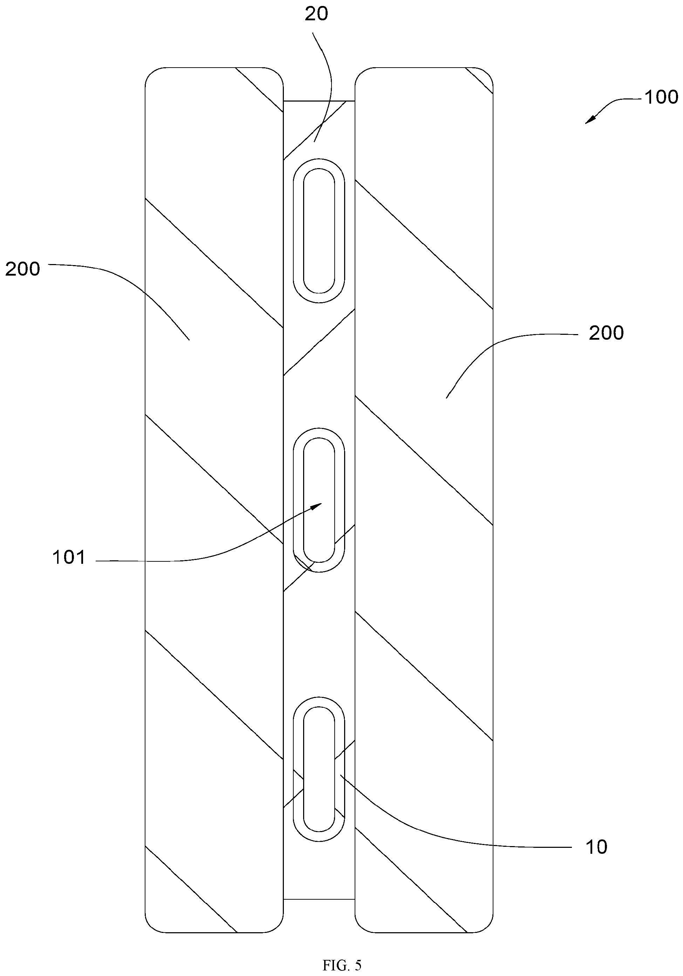

As shown in FIG. 1 to FIG. 5, in order to solve the problem of high cost and poor safety of related liquid cooling plates, the present disclosure provides a vertical cooling plate 100. The vertical cooling plate 100 is applied to a battery pack. In some embodiments, a plurality of battery cells (not shown) are arranged in the battery pack. The vertical cooling plate 100 is configured to be fitted on a surface of a battery cell perpendicular to a thickness direction of the battery cell to perform heat exchange with the battery cell.

In some embodiments, the surface of the battery cell perpendicular to the thickness direction of the battery cell is a large surface of the battery cell. That is, the surface of the battery cell perpendicular to the thickness direction of the battery cell is a side surface with the largest area of the battery cell. The vertical cooling plate 100 is fitted on the large surface of the battery cell for cooling. Compared with related liquid cooling plates arranged at a bottom of the battery cell, a contact area between the vertical cooling plate 100 and the battery cell is significantly increased, thereby effectively enhancing a cooling strength for the battery cell, alleviating the problem of uneven heat dissipation of the battery cell, and improving the operational reliability of the battery cell.

As shown in FIG. 2 to FIG. 4, the present disclosure provides the vertical cooling plate 100 including a flow tube 10 and a thermally conductive plate 20. The flow tube 10 includes a plastic thermally conductive member. The thermally conductive plate 20 includes a flexible thermally conductive member. The thermally conductive plate 20 is directly molded on a surface of the flow tube 10 by infusion, enabling the thermally conductive plate 20 to be able to wrap the flow tube 10. The flow tube 10 is defined with a flow cavity 101. The flow cavity 101 is configured for a heat exchange medium to pass through. The thermally conductive plate 20 is configured to be fitted on the battery cell, enabling the heat exchange medium to receive heat transferred from the battery cell via the thermally conductive plate 20 and the flow tube 10.

On one hand, by providing the flow tube 10 including the plastic thermally conductive member, a heat conducting performance of the flow tube 10 may be ensured, and the material cost of the vertical cooling plate 100 is reduced because of low cost of plastic. Moreover, the weight of plastic is lighter than the weight of aluminum alloys, thereby effectively reducing the weight of the vertical cooling plate 100 and meeting lightweight requirements. On the other hand, by providing the thermally conductive plate 20 including the flexible thermally conductive member, the thermally conductive plate 20 may be better fitted on the battery cell because of the flexibility of the thermally conductive plate 20, thereby improving the contact effect between the thermally conductive plate 20 and the battery cell, and greatly improving the heat exchange efficiency between the vertical cooling plate 100 and the battery cell. Furthermore, the flexible thermally conductive plate 20 is conducive to absorb the tolerance of the battery cell or absorb the expansion force of the battery cell after the battery cell cyclically expands, so as to avoid the expansion force of the battery cell from squeezing the flow tube 10, causing the flow tube 10 to rupture, thereby causing the heat exchange medium to leak from the flow tube 10. The vertical cooling plate 100 may ensure a relatively high level of safety after long-term use. In addition, the thermally conductive plate 20 is directly molded on the surface of the flow tube 10 by means of infusion. The producing method is simple for molding, may effectively shorten assembly steps of the thermally conductive plate 20 and the flow tube 10, thereby improving the molding efficiency of the vertical cooling plate 100. Furthermore, the producing method avoids disadvantages of high energy consumption of related brazing process and adverse effects of brazing on the flatness of the product, thereby further improving the heat exchange efficiency and reducing costs.

In some embodiments, the heat generated by the battery cell is transferred to the heat exchange medium in the flow cavity 101 through the thermally conductive plate 20 and the flow tube 10 in sequence, and transfers of the heat is achieved through the flow of the heat exchange medium. The heat exchange medium may be a cooling medium or a high-temperature medium to achieve cooling or heat preservation of the battery cell.

In some embodiments, a material of the flow tube 10 includes thermally conductive plastic. The flow tube 10 is extruded and molded by the thermally conductive plastic. In a process of extruding the thermally conductive plastic to form the flow tube 10, the thermally conductive plastic is heated to a molten state, and the molten thermally conductive plastic may be processed into a desired shape through a mold corresponding to the desired shape. In this way, the molding of the flow tube 10 is simple, thereby effectively improving the processing rate of the flow tube 10 and reducing costs. In some embodiments, the flow tube 10 may be processed and molded according to molds of corresponding sizes manufactured according to actual thermal management requirements of different battery packs.

It should be noted that the thermally conductive plastic is a type of material formed by using plastic as a plastic matrix and filling a thermally conductive material within the plastic matrix. The weight of the thermally conductive plastic is light, and compared to the related aluminum alloys, weight reduction of the thermally conductive plastic may reach 40% to 50%. Moreover, the thermally conductive plastic possesses excellent thermal conductivity, insulation properties, and processing capabilities, which may meet different usage requirements. Therefore, the flow tube 10 made of the thermally conductive plastic may overcome the problem of low thermal conductivity efficiency of related plastic.

It should also be noted that the thermal conductivity of a material is usually represented by a thermal conductivity coefficient. By filling different amounts of thermally conductive materials within a same plastic matrix, a thermal conductivity coefficient of the thermally conductive plastic may be changed accordingly to meet different heat exchange requirements.

In some embodiments, the plastic matrix may be polyphenylene sulfide (PPS), polyamide 6 (PA6), polyamide 66 (PA66), liquid crystal polymer (LCP), thermoplastic elastomer (TPE), polycarbonate (PC), polypropylene (PP), polyphthalamide (PPA), polyetheretherketone (PEEK), etc. The filled thermally conductive material may be aluminum nitride (AlN), silicon carbide (SiC), aluminum oxide (Al₂O₃), graphite, fibrous high thermal conductivity carbon powder, flaky high thermal conductivity carbon powder, etc. The material of the plastic matrix and the material of the thermally conductive material are not listed here one by one.

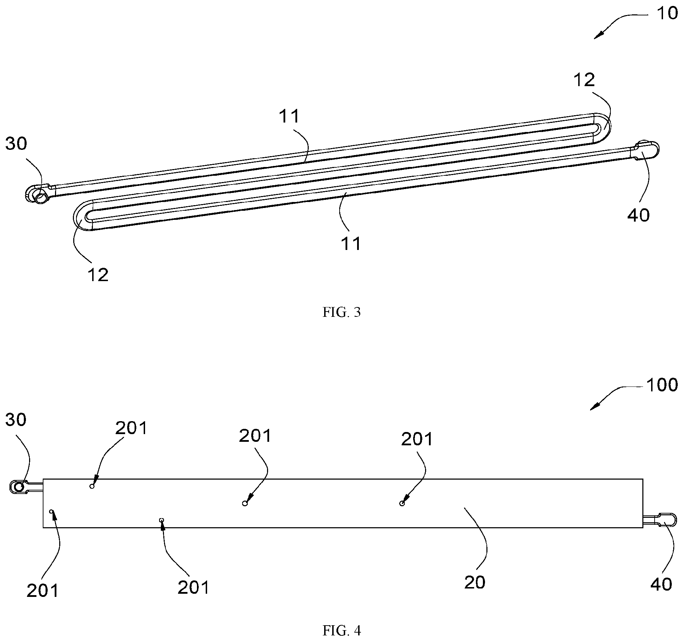

In some embodiments, as shown in FIG. 3, the flow tube 10 includes a plurality of branch tubes 11 and a bent tube 12. The plurality of branch tubes 11 are arranged separated from each other along a width direction of the vertical cooling plate 100. The bent tube 12 is connected to ends of two adjacent branch tubes 11 facing a same side and is communicated with the two adjacent branch tubes 11.

By providing the plurality of branch tubes 11 and realizing diverting connections between two adjacent branch tubes 11 through the bent tube 12, a flow direction of the heat exchange medium within the flow cavity 101 may be changed. In a same spatial area, a flow length and a flow area of the heat exchange medium are further increased, thereby effectively improving the heat exchange effect of the vertical cooling plate 100 on the battery cell.

In some embodiments, the branch tubes 11 are configured as long straight tubes, and the bent tube 12 is configured as a U-shaped tube. Both the branch tubes 11 and the bent tube 12 are arranged in a flat shape. A thickness direction of the branch tubes 11 and the bent tube 12 is the same as a thickness direction of the thermally conductive plate 20. Both the thickness direction of the branch tubes 11 and the bent tube 12 and the thickness direction of the thermally conductive plate 20 are the thickness direction of the battery cell. It is easy to understand that the branch tubes 11 and the bent tube 12 achieve indirect contact with the battery cell through large surfaces of the branch tubes 11 and the bent tube 12, further increasing contact areas and effectively reducing a heat transfer distance between the flow tube 10 and the battery cell, thereby achieving effective transfer of heat and significantly improving the heat exchange efficiency. In addition, the thickness of the thermally conductive plate 20 may be reduced, and the space utilization rate may be improved.

In some embodiments, the branch tubes 11 and the bent tube 12 are integrally bent and formed. That is, the bent tube 12 may be bent and formed by taking advantage of thermoplastic of plastic. In this way, the structural strength of the flow tube 10 is significantly improved, the processing difficulty of the branch tubes 11 and the bent tube 12 is reduced, and the assembly efficiency of the branch tubes 11 and the bent tube 12 is enhanced.

In some embodiments, the branch tubes 11 and the bent tube 12 are separate structures. The branch tubes 11 and the bent tube 12 are fixed with each other by welding. The branch tubes 11 and the bent tube 12 may also be fixedly connected by means of welding. A bending radius of the bent tube 12 is easier to control, thereby improving the processing and fitting accuracy of components.

In some embodiments, as shown in FIG. 2, the vertical cooling plate 100 further includes an inlet tube 30 and an outlet tube 40. The inlet tube 30 and the outlet tube 40 are respectively connected to two ends of the flow tube 10 and are both communicated with the flow cavity 101.

In some embodiments, the inlet tube 30 and the outlet tube 40 are fixed to the flow tube 10 by means of welding.

It can be understood that the inlet tube 30 is defined with an inlet for the heat exchange medium. The outlet tube 40 is defined with an outlet for the heat exchange medium. When flowing, the heat exchange medium enters the flow cavity 101 through the inlet tube 30 and flows out of the flow cavity 101 through the outlet tube 40. The arrangement of the inlet tube 30 and the outlet tube 40 is conducive to the connection and fixation of the flow tube 10 and external cooling tubes, thereby facilitating inflow and outflow of the heat exchange medium.

In some embodiments, the inlet tube 30 and the outlet tube 40 are arranged on opposite sides of the vertical cooling plate 100 along a length direction of the branch tubes 11. In this way, interference is less likely to occur between external cooling tubes connected to the inlet tube 30 and external cooling tubes connected to the outlet tube 40, thereby facilitating layout of tubes and improving the reliability of a device.

In some embodiments, a material of the thermally conductive plate 20 includes thermally conductive silicone.

Related silicone material only possesses good elasticity but has poor thermal conductivity. The thermally conductive silicone provided in the present disclosure is a type of material formed by using a silicone as a silicone matrix and filling a thermally conductive material within the silicone matrix. The thermally conductive silicone has good thermal conductivity and elasticity. Therefore, the thermally conductive plate 20 made of the thermally conductive silicone also has good elasticity and thermal conductivity, which not only meets the heat conduction requirements of the thermally conductive plate 20, but also ensures that the thermally conductive plate 20 may effectively absorb the tolerances between the battery cells and the expansion forces generated during cycling, thereby effectively improving the overall safety.

During a process of injecting silicone to mold the thermally conductive plate 20, the thermally conductive silicone is heated to a molten state, and the molten thermally conductive silicone is injected into a mold in which the flow tube 10 is fixed. As the thermally conductive silicone cools and solidifies, the thermally conductive silicone may be attached to the outer surface of the flow tube 10. The thermally conductive plate 20 of the present disclosure may be obtained by cutting off excess thermally conductive silicone. In this way, the forming of the thermally conductive plate 20 is simple, which may effectively increase the processing speed of the thermally conductive plate 20 and reduce costs. In some embodiments, the elasticity of the thermally conductive silicone may be adjusted by changing an amount of injected material and a magnitude of a pressure.

In some embodiments, the flow tube 10 is arranged in middle of the thermally conductive plate 20 along the thickness direction of the thermally conductive plate 20, thereby ensuring the uniformity of heat transfer and stress on the thermally conductive plate 20 by the flow tube 10.

In order to improve the connection reliability between the thermally conductive plate 20 and the flow tube 10, in some embodiments, as shown in FIG. 4, the thermally conductive plate 20 is defined with a supporting hole 201. The supporting hole 201 is configured for a supporting column on a glue injection mold to pass through, so that the supporting column is able to press the flow tube 10 tightly. In this way, it effectively ensures the firm connection between the flow tube 10 and the mold when the thermally conductive silicone is injected and molded to form the thermally conductive plate 20, thereby avoiding a gap existing between the thermally conductive plate 20 and the flow tube 10 due to shaking of the flow tube 10. Thereby, fitting accuracy between the thermally conductive plate 20 and the flow tube 10 is effectively improved, and qualified rate of the product is enhanced.

In some embodiments, a number of the supporting hole 201 is more than one. The more than one supporting hole 201 are arranged separated from each other on the thermally conductive plate 20. In this way, fixing effect between the flow tube 10 and the mold may be further improved.

The present disclosure also provides a battery pack. The battery pack includes a plurality of battery cells and a plurality of vertical cooling plates 100 described in any one of the above embodiments. The plurality of battery cells are arranged separated from each other along a thickness direction of the battery cells. Each of the vertical cooling plates 100 is arranged between two adjacent battery cells and connected to the two adjacent battery cells.

In the battery pack, the battery cells and the vertical cooling plates 100 are stacked in sequence along the thickness direction of the battery cells. In this way, the vertical cooling plates 100 may be fitted on both large surfaces of the two adjacent battery cells to achieve cooling, thereby improving the heat exchange efficiency and ensuring the uniformity of heat exchange. In addition, the vertical cooling plates 100 may absorb tolerances of the battery cells through the elasticity of the thermally conductive plate 20, thereby facilitating the assembly of the battery cells and reducing the difficulty of assembling the battery cells. When the battery cells expand during long-term cycling, resulting in an increase in thickness of the battery cells, the vertical cooling plates 100 may also absorb the expansion force through external flexible thermally conductive plate 20, preventing the battery cells from squeezing flow tubes 10 located inside the vertical cooling plates 100 and causing the flow tubes 10 to rupture and leakage, thereby greatly improving the safety performance of the battery pack.

Related liquid cooling plates are usually bonded to battery cells by means of thermally conductive structural adhesives. In this way, it is not easy to disassemble the liquid cooling plates and the battery cells, resulting in difficulties in subsequent maintenance. Any carelessness may cause the entire module or the whole battery pack to be scrapped.

In some embodiments of the present disclosure, the vertical cooling plates 100 are bonded to the battery cells by means of double-sided adhesive tapes 200. In this way, connection between the vertical cooling plates 100 and the battery cells is simple, and bonding and fixing between the vertical cooling plates 100 and the battery cells may be easily implemented. Moreover, when maintenance is required, it is only need to remove the double-sided adhesive tapes 200 between the vertical cooling plates 100 and the battery cells, which improves the convenience of disassembly.

The present disclosure also provides a method for producing a vertical cooling plate 100, which is configured to produce the vertical cooling plate 100 mentioned above. The method for producing the vertical cooling plate 100 may include operations executed by the following blocks.

At block S1, thermally conductive plastic is processed into a flow tube 10 defined with a flow cavity 101.

At block S2, thermally conductive silicone is cast on an outer surface of the flow tube 10 to form a thermally conductive plate 20, enabling the thermally conductive plate 20 to wrap the outer surface of the flow tube 10.

At block S3, an inlet tube 30 and an outlet tube 40 are respectively welded to two ends of the flow tube 10.

In some embodiments, forming the thermally conductive plate 20 at block S2 may executed by the following blocks.

At block S21, the flow tube 10 is installed in a glue injection mold, and a supporting column on the glue injection mold press against the outer surface of the flow tube 10.

At block S22, a predetermined amount of molten thermally conductive silicone is poured into the glue injection mold, the thermally conductive silicone wraps the outer surface of the flow tube 10, and a pressure regulating device is used to adjust a pressure on the thermally conductive silicone.

At block S23, excess thermally conductive silicone is cut off after the thermally conductive silicone has been completely cured.

Technical features of the embodiments described above may be combined arbitrarily. For the sake of brevity in description, not all possible combinations of various technical features in the above-described embodiments are described. However, as long as there is no contradiction in the combination of these technical features, they should all be regarded as being within the scope described in the specification.

The above-described embodiments merely represent several implementation manners of the present disclosure. The descriptions are relatively specific and detailed, but the descriptions should not be construed as limitations on the scope of the present disclosure. It should be noted that, for a person of ordinary skill in the art, several modifications and improvements may be made without departing from the concept of the present disclosure, and all of these fall within the protection scope of the present disclosure. Therefore, the scope of patent protection of the present disclosure shall be subject to the attached claims.

## Claims

1. A cooling plate (100), **characterized by** configured to be fitted on a surface of a battery cell perpendicular to a thickness direction of the battery cell for exchanging heat with the battery cell, wherein the surface of the battery cell perpendicular to the thickness direction of the battery cell is a side surface with the largest area of the battery cell, and the cooling plate (100) comprises:
a flow tube (10), comprising a plastic thermally conductive member and defined with a flow cavity (101), wherein the flow cavity (101) is configured for a heat exchange medium to pass through; and
a thermally conductive plate (20), comprising a flexible thermally conductive member, the thermally conductive plate (20) is directly molded on a surface of the flow tube (10) by infusion, enabling the thermally conductive plate (20) to wrap the flow tube (10); the thermally conductive plate (20) is configured to be fitted on the battery cell, enabling the heat exchange medium to receive heat transferred from the battery cell via the thermally conductive plate (20) and the flow tube (1 0), **characterised in that** a material of the thermally conductive plate (20) comprises thermally conductive silicone, and the thermally conductive silicone is a type of material formed by using a silicone as a silicone matrix and filling a thermally conductive material within the silicone matrix.

2. The cooling plate according to claim 1, wherein a material of the flow tube (10) comprises thermally conductive plastic, and the flow tube (10) is extruded and molded by the thermally conductive plastic.

3. The cooling plate according to claim 1, wherein the flow tube (10) comprising a plurality of branch tubes (11) and a bent tube (12), the plurality of branch tubes (11) are arranged separated from each other along a width direction of the cooling plate, and the bent tube (12) is connected to ends of two adjacent branch tubes (11) facing a same side and is communicated with the two adjacent branch tubes (11).

4. The cooling plate according to claim 3, wherein the branch tubes (11) and the bent tube (12) are integrally bent and formed.

5. The cooling plate according to claim 3, wherein the branch tubes (11) and the bent tube (12) are separate structures, and the branch tubes (11) and the bent tube (12) are fixed with each other by welding.

6. The cooling plate according to claim 3, wherein the branch tubes (11) are configured as long straight tubes, and the bent tube (12) is configured as a U-shaped tube.

7. The cooling plate according to claim 1, wherein the thermally conductive plate (20) is defined with a supporting hole (201), and the supporting hole (201) is configured for a supporting column on a glue injection mold to pass through, enabling the supporting column to press the flow tube (20).

8. The cooling plate according to claim 1, further comprising an inlet tube (30) and an outlet tube (40), and the inlet tube (30) and the outlet tube (40) are respectively connected to two ends of the flow tube (10) and are both communicated with the flow cavity (101).

9. The cooling plate according to claim 8, wherein the inlet tube (30) and the outlet tube (40) are arranged on opposite sides of the cooling plate (100).

10. A battery pack, **characterized by** comprising:
a plurality of battery cells, arranged separate from each other along a thickness direction of the battery cells; and
a plurality of cooling plates according to any one of claims 1 to 9, wherein each of the cooling plates (100) is arranged between two adjacent battery cells and connected to the two adjacent battery cells.

11. The battery pack according to claim 10, wherein the battery cells and the cooling plates (100) are stacked in sequence along the thickness direction of the battery cells.

12. A method for producing a cooling plate, configured to produce the cooling plate (100) according to any one of claims 1 to 9, and **characterized by** comprising:
processing thermally conductive plastic into a flow tube (10) defined with a flow cavity (101); and
casting thermally conductive silicone on an outer surface of the flow tube (10) to form a thermally conductive plate (20), enabling the thermally conductive plate (20) to wrap the outer surface of the flow tube (10).

13. The method according to claim 12, further comprising:
welding an inlet tube (30) and an outlet tube (40) to two ends of the flow tube (10) respectively.

14. The method according to claim 12, wherein the casting thermally conductive silicone on an outer surface of the flow tube (10) to form a thermally conductive plate (20), comprises:
installing the flow tube (10) in a glue injection mold, enabling a supporting column on the glue injection mold to press against an outer surface of the flow tube (10);
pouring a predetermined amount of molten thermally conductive silicone into the glue injection mold; and
cutting off excess thermally conductive silicone after the thermally conductive silicone has been completely cured.

## Patentansprüche

1. Kühlplatte (100), **dadurch gekennzeichnet, dass** sie ausgebildet ist, auf einer Oberfläche einer Batteriezelle senkrecht zu einer Dickenrichtung der Batteriezelle angebracht zu werden, um Wärme mit der Batteriezelle auszutauschen, wobei die Oberfläche der Batteriezelle senkrecht zu der Dickenrichtung der Batteriezelle eine Seitenfläche mit der größten Fläche der Batteriezelle ist, und die Kühlplatte (100) umfasst:
ein Strömungsrohr (10), das ein thermisch leitfähiges Kunststoffelement umfasst und mit einem Strömungshohlraum (101) versehen ist, wobei der Strömungshohlraum (101) ausgebildet ist, dass ein Wärmeaustauschmedium hindurchströmen kann; und
eine thermisch leitfähige Platte (20), die ein flexibles thermisch leitfähiges Element aufweist, wobei die thermisch leitfähige Platte (20) durch ein Infusionsverfahren direkt auf eine Oberfläche des Strömungsrohrs (10) aufgebracht ist, wodurch die thermisch leitfähige Platte (20) das Strömungsrohr (10) umhüllen kann; die thermisch leitfähige Platte (20) ausgebildet ist, auf der Batteriezelle angebracht zu werden, wodurch das Wärmeaustauschmedium die von der Batteriezelle über die thermisch leitfähige Platte (20) und das Strömungsrohr (10) übertragene Wärme aufnehmen kann,
**dadurch gekennzeichnet, dass** ein Material der thermisch leitfähigen Platte (20) thermisch leitfähiges Silikon umfasst und das thermisch leitfähige Silikon eine Materialart ist, die durch Verwendung eines Silikons als Silikonmatrix und Einfüllen eines thermisch leitfähigen Materials in die Silikonmatrix gebildet ist.

2. Kühlplatte nach Anspruch 1, wobei ein Material des Strömungsrohrs (10) thermisch leitfähigen Kunststoff umfasst und das Strömungsrohr (10) aus dem thermisch leitfähigen Kunststoff extrudiert und geformt ist.

3. Kühlplatte nach Anspruch 1, wobei das Strömungsrohr (10) eine Vielzahl von Abzweigrohren (11) und ein gebogenes Rohr (12) umfasst, wobei die Vielzahl von Abzweigrohren (11) entlang einer Breitenrichtung der Kühlplatte voneinander getrennt angeordnet sind und das gebogene Rohr (12) an den Enden zweier benachbarter Abzweigrohre (11) angeschlossen ist, die derselben Seite zugewandt sind, und mit den beiden benachbarten Abzweigrohren (11) in Verbindung steht.

4. Kühlplatte nach Anspruch 3, wobei die Abzweigrohre (11) und das gebogene Rohr (12) einstückig gebogen und geformt sind.

5. Kühlplatte nach Anspruch 3, wobei die Abzweigrohre (11) und das gebogene Rohr (12) separate Strukturen sind und die Abzweigrohre (11) und das gebogene Rohr (12) durch Schweißen miteinander verbunden sind.

6. Kühlplatte nach Anspruch 3, wobei die Abzweigrohre (11) als lange, gerade Rohre ausgebildet sind und das gebogene Rohr (12) als U-förmiges Rohr ausgebildet ist.

7. Kühlplatte nach Anspruch 1, wobei die thermisch leitfähige Platte (20) mit einem Stützloch (201) versehen ist und das Stützloch (201) ausgebildet ist, dass eine Stützsäule auf einer Klebstoffspritzgussform hindurchgeführt werden kann, wodurch die Stützsäule das Strömungsrohr (10) zusammendrücken kann.

8. Kühlplatte nach Anspruch 1, ferner umfassend ein Einlassrohr (30) und ein Auslassrohr (40), wobei das Einlassrohr (30) und das Auslassrohr (40) jeweils mit zwei Enden des Strömungsrohrs (10) verbunden sind und beide mit dem Strömungshohlraum (101) in Verbindung stehen.

9. Kühlplatte nach Anspruch 8, wobei das Einlassrohr (30) und das Auslassrohr (40) auf gegenüberliegenden Seiten der Kühlplatte (100) angeordnet sind.

10. Batteriepack, **dadurch gekennzeichnet, dass** er umfasst:
eine Vielzahl von Batteriezellen, die entlang einer Dickenrichtung der Batteriezellen voneinander getrennt angeordnet sind; und
eine Vielzahl von Kühlplatten nach einem der Ansprüche 1 bis 9, wobei jede der Kühlplatten (100) zwischen zwei benachbarten Batteriezellen angeordnet und mit den beiden benachbarten Batteriezellen verbunden ist.

11. Batteriepack nach Anspruch 10, wobei die Batteriezellen und die Kühlplatten (100) nacheinander entlang der Dickenrichtung der Batteriezellen gestapelt sind.

12. Verfahren zur Herstellung einer Kühlplatte, das zur Herstellung der Kühlplatte (100) nach einem der Ansprüche 1 bis 9 ausgebildet ist und **dadurch gekennzeichnet ist, dass** es umfasst:
Verarbeiten von thermisch leitfähigem Kunststoff zu einem Strömungsrohr (10), das mit einem Strömungshohlraum (101) versehen ist; und
Aufbringen von thermisch leitfähigem Silikon auf eine Außenfläche des Strömungsrohrs (10), um eine thermisch leitfähige Platte (20) zu bilden, wodurch die thermisch leitfähige Platte (20) die Außenfläche des Strömungsrohrs (10) umhüllen kann.

13. Verfahren nach Anspruch 12 ferner umfassend:
Verschweißen eines Einlassrohrs (30) und eines Auslassrohrs (40) mit jeweils einem Ende des Strömungsrohrs (10).

14. Verfahren nach Anspruch 12, wobei das Aufbringen von thermisch leitfähigem Silikon auf eine Außenfläche des Strömungsrohrs (10) zur Bildung einer thermisch leitfähigen Platte (20) umfasst:
das Einsetzen des Strömungsrohrs (10) in eine Klebstoffspritzgussform, wobei eine Stützsäule auf der Klebstoffspritzgussform gegen eine Außenfläche des Strömungsrohrs (10) drücken kann;
Gießen einer vorbestimmten Menge geschmolzenen thermisch leitfähigen Silikons in die Klebstoffspritzgussform; und
Abschneiden von überschüssigem thermisch leitfähigem Silikon, nachdem das thermisch leitfähige Silikon vollständig ausgehärtet ist.

## Revendications

1. Plaque de refroidissement (100), **caractérisée en ce qu'**elle est conçue pour être montée sur une surface d'une cellule de batterie perpendiculaire au sens de l'épaisseur de ladite cellule de batterie afin d'échanger de la chaleur avec celle-ci, la surface de la cellule de batterie perpendiculaire au sens de l'épaisseur de celle-ci étant la surface latérale présentant la plus grande surface de la cellule de batterie, et la plaque de refroidissement (100) comprenant :
un tube d'écoulement (10), comprenant un élément en plastique thermoconducteur et muni d'une cavité d'écoulement (101), la cavité d'écoulement (101) étant conçue pour permettre le passage d'un fluide d'échange thermique ; et
une plaque thermoconductrice (20), comprenant un élément thermoconducteur flexible, la plaque thermoconductrice (20) étant moulée directement sur une surface du tube d'écoulement (10) par infusion, ce qui permet à la plaque thermoconductrice (20) d'envelopper le tube d'écoulement (10) ; la plaque thermoconductrice (20) est conçue pour être montée sur la cellule de batterie, ce qui permet au fluide d'échange thermique de recevoir la chaleur transférée depuis la cellule de batterie via la plaque thermoconductrice (20) et le tube d'écoulement (10),
**caractérisée en ce que** le matériau de la plaque thermoconductrice (20) comprend du silicone thermoconducteur, et **en ce que** le silicone thermoconducteur est un type de matériau formé en utilisant un silicone comme matrice de silicone et en remplissant ladite matrice de silicone d'un matériau thermoconducteur.

2. Plaque de refroidissement selon la revendication 1, dans laquelle le matériau du tube d'écoulement (10) comprend du plastique thermoconducteur, et le tube d'écoulement (10) est extrudé et moulé à partir dudit plastique thermoconducteur.

3. Plaque de refroidissement selon la revendication 1, dans laquelle le tube d'écoulement (10) comprend une pluralité de tubes de dérivation (11) et un tube coudé (12), lesdits tubes de dérivation (11) sont disposés de manière espacée les uns des autres dans le sens de la largeur de la plaque de refroidissement, et le tube coudé (12) est relié aux extrémités de deux tubes de dérivation (11) adjacents tournés vers un même côté et communique avec ces deux tubes de dérivation (11) adjacents.

4. Plaque de refroidissement selon la revendication 3, dans laquelle les tubes de dérivation (11) et le tube coudé (12) sont coudés et formés d'un seul tenant.

5. Plaque de refroidissement selon la revendication 3, dans laquelle les tubes de dérivation (11) et le tube coudé (12) sont des structures distinctes, et les tubes de dérivation (11) et le tube coudé (12) sont fixés les uns aux autres par soudage.

6. Plaque de refroidissement selon la revendication 3, dans laquelle les tubes de dérivation (11) sont configurés comme de longs tubes droits, et le tube coudé (12) est configuré comme un tube en forme de U.

7. Plaque de refroidissement selon la revendication 1, dans laquelle la plaque thermoconductrice (20) comporte un trou de support (201), et le trou de support (201) est configuré pour permettre le passage d'une colonne de support sur un moule d'injection de colle, permettant ainsi à la colonne de support d'exercer une pression sur le tube d'écoulement (10).

8. Plaque de refroidissement selon la revendication 1, comprenant en outre un tube d'entrée (30) et un tube de sortie (40), le tube d'entrée (30) et le tube de sortie (40) étant respectivement raccordés aux deux extrémités du tube d'écoulement (10) et communiquant tous deux avec la cavité d'écoulement (101).

9. Plaque de refroidissement selon la revendication 8, dans laquelle le tube d'entrée (30) et le tube de sortie (40) sont disposés sur des côtés opposés de la plaque de refroidissement (100).

10. Bloc-batterie, **caractérisé en ce qu'**il comprend :
une pluralité de cellules de batterie, disposées séparément les unes des autres dans le sens de l'épaisseur des cellules de batterie ; et
une pluralité de plaques de refroidissement selon l'une quelconque des revendications 1 à 9, dans lequel chacune des plaques de refroidissement (100) est disposée entre deux cellules de batterie adjacentes et reliée à ces deux cellules de batterie adjacentes.

11. Bloc-batterie selon la revendication 10, dans lequel les cellules de batterie et les plaques de refroidissement (100) sont empilées successivement le long du sens de l'épaisseur des cellules de batterie.

12. Procédé de fabrication d'une plaque de refroidissement, conçu pour produire la plaque de refroidissement (100) selon l'une quelconque des revendications 1 à 9, et **caractérisé en ce qu'**il comprend :
un traitement d'une matière plastique thermoconductrice pour former un tube d'écoulement (10) muni d'une cavité d'écoulement (101) ; et
un moulage de silicone thermoconducteur sur une surface extérieure du tube d'écoulement (10) pour former une plaque thermoconductrice (20), permettant à la plaque thermoconductrice (20) d'envelopper la surface extérieure du tube d'écoulement (10).

13. Procédé selon la revendication 12, comprenant en outre :
un soudage d'un tube d'entrée (30) et d'un tube de sortie (40) respectivement aux deux extrémités du tube d'écoulement (10).

14. Procédé selon la revendication 12, dans lequel le moulage de silicone thermoconducteur sur une surface extérieure du tube d'écoulement (10) pour former une plaque thermoconductrice (20) comprend :
une installation du tube d'écoulement (10) dans un moule d'injection de colle, de manière à ce qu'une colonne de support du moule d'injection de colle appuie contre une surface extérieure du tube d'écoulement (10) ;
un versement d'une quantité prédéterminée de silicone thermoconductrice fondue dans le moule d'injection de colle ; et
une découpe de l'excédent de silicone thermoconductrice après que celle-ci a complètement durci.
